# EUROPEAN PATENT APPLICATION

(11) **EP 1 686 828 A2**
(43) Date of publication of application: **02.08.2006**
(21) Application number: 06002056.7
(22) Date of filing: 01.02.2006
(51) Int. Cl.: H04Q 7/38

(54) **Mobile station and communication system selecting method**

(30) Priority: 01.02.2005 JP 2005025651
(71) Applicant: NTT DoCoMo INC., Chiyoda-ku Tokyo 100-6150 (JP)
(72) Inventor: Motegi, Masayuki, IP Dpt., NTT DoCoMo, Inc., Chiyoda-ku, Tokyo (JP); Takahashi, Hideaki, IP Dpt., NTT DoCoMo, Inc., Chiyoda-ku, Tokyo (JP); Kato, Yasuhiro, IP Dpt., NTT DoCoMo, Inc., Chiyoda-ku, Tokyo (JP); Nakamura, Takehiro, IP Dpt., NTT DoCoMo, Inc., Chiyoda-ku, Tokyo (JP)
(74) Representative: HOFFMANN EITLE

(57) **Abstract**

A mobile station (100) is connectable to a first communication system for managing a service area with a respective first area and to a second communication system for managing a service area with a respective second area. The mobile station (100) includes a first wireless communicator (110) for receiving first notification information capable of specifying a current area and neighboring areas corresponding to the first communication system, a second wireless communicator (120) for receiving second notification information capable of specifying a current area and neighboring areas corresponding to the second communication system, and a communication system selector (140) for selecting the communication system for performing the communication, out of the first communication system and the second communication system, based on the first notification information or the second notification information.

## Description

### BACKGROUND OF THE INVENTION

### Field of the Invention

The present invention relates to a mobile station configured to select a communication system for performing communication out of multiple communication systems and to a communication system selecting method.

### Background Art

Mobile stations connectable to multiple communication systems that adopt different wireless access methods have been conventionally known. Such mobile stations include a mobile station connectable to the IMT 2000 communication system and to the PDC (Personal Digital Cellular) communication system, a mobile station connectable to the Cdma 2000 (Code Division Multiple Access 2000) communication system and to the 1xEV-DO communication system, and the like.

Moreover, in terms of such a mobile station, a method of selecting a communication system (a communication system selecting method) for performing communication out of multiple communication systems has also been known.

For example, when the mobile station is connectable to the IMT 2000 communication system and to the PDC communication system, a user would select any one of a stand-by mode in the IMT 2000 communication system, a stand-by mode in the PDC communication system, and a stand-by mode preferentially in the IMT 2000 communication system.

On the other hand, when the mobile station is connectable to the Cdma 2000 communication system and to the 1xEV-DO communication system, the mobile station stands by in the Cdma 2000 system because the 1xEV-DO communication system can only offer non-real-time communication. Meanwhile, when starting real-time communication through the Cdma 2000 communication system in the course of performing non-real-time communication through the 1xEV-DO communication system, the mobile station breaks the connection (session) to the 1xEV-DO communication system and sets up a new connection (session) to the Cdma 2000 communication system, thereby performing real-time communication and non-real-time communication through the Cdma 2000 communication system (see 3GPP2 Interoperability Specification (IOS) for High Rate Packet Data (HRPD) Access Network Interface, for example).
Moreover, a method of selecting a communication system (a communication system selecting method) for performing communication out of multiple communication systems (namely, the PDC communication system and the PHS (Portable Handyphone System) communication system) in light of the size of a cell and a communication speed has been also proposed (See Patent Document 1) Japanese Unexamined Patent Publication No. 2002 - 190769 (Claim 9 and Fig. 3), for example).

As described above, the conventional communication system selecting method is configured to allow a user to select the communication system or configured to select the communication system in light of the size of a cell or a communication speed.

Therefore, the conventional communication system selecting method may fail to select an optimal communication system when the mobile station is located in an area (cell) called an isolated cell, for example.

### SUMMARY OF THE INVENTION

The present invention has been made to solve the foregoing problem. An object of the present invention is to provide a mobile station and a communication system selecting method capable of selecting an optimal communication system for performing communication out of multiple communication systems.

A first aspect of the present invention, a mobile station is connectable to a first communication system configured to manage a service area with a respective first area and to a second communication system configured to manage a service area with a respective second area. The mobile station includes a receiver configured to receive notification information including at least any one of first area information capable of specifying the first area and a first neighboring area neighbor to the first area, and second area information capable of specifying the second area and a second neighboring area neighbor to the second area, from at least any one of the first communication system and the second communication system, and a communication system selector configured to select the communication system for performing the communication, out of the first communication system and the second communication system, based on the notification information received by the receiver.

According to this aspect, the communication system selector selects the communication system for performing the communication, out of the first communication system and the second communication system, based on the notification information including at least any one of the first area information and the second area information. Therefore, the mobile station can select an optimal communication system for performing the communication even when the mobile station is located in an isolated area.

A second aspect of the present information, the first communication system and the second communication system are able to provide real-time communication and non-real-time communication. Here, the second communication system is more suitable for the non-real-time communication as compared to the first communication system. The mobile station includes a communication type judging unit configured to judge whether the real-time communication is to be started or the non-real-time communication is to be started. Moreover, the communication system selector selects the communication system for performing the communication, based on a judgment result by the communication type judging unit.

According to this aspect, the communication system selector selects the communication system for performing the communication, out of the first communication system and the second communication system, based on the judgment result by the communication type judging unit. Therefore, the mobile station can select the optimal communication system for performing the communication depending on the type of communication to be started.

In the second aspect of the present invention, the communication system selector may select the first communication system in preference to the second communication system, when the communication type judging unit judges that the real-time communication is to be started.

In the second aspect of the present invention, the communication system selector may select the second communication system in preference to the first communication system, when the communication type judging unit judges that the non-real-time communication is to be started.

In the second aspect of the present invention, the communication system selector may select the first communication system in preference to the second communication system, when the communication type judging unit judges that the non-real-time communication is to be started in the course of performing the real-time communication.

In the second aspect of the present invention, the communication system selector may select the first communication system in preference to the second communication system, when the communication type judging unit judges that the non-real-time communication is to be started in the course of performing the real-time communication.

In the second aspect of the present invention, the communication system selector may select the second communication system in preference to the first communication system, when the communication type judging unit judges that the real-time communication is to be started in the course of performing the non-real-time communication, providing that the notification information includes the information to specify the second neighboring area.

A third aspect of the present invention, a communication system selecting method allows a mobile station to select a communication system, in which the mobile station is connectable to a first communication system configured to manage a service area with a respective first area, and to a second communication system configured to manage a service area with a respective second area. Here, the communication system selecting method includes the step of receiving notification information including at least any one of first area information capable of specifying the first area and a first neighboring area neighbor to the first area, and second area information capable of specifying the second area and a second neighboring area neighbor to the second area, from the first communication system or the second communication system, and includes the step of selecting any one of the first communication system and the second communication system, based on the notification information received from the first communication system or the second communication system.

According to the present invention, it is possible to provide a mobile station and a communication system selecting method capable of selecting an optimal communication system for performing communication out of multiple communication systems.

### BRIEF DESCRIPTION OF THE DRAWINGS

Fig. 1 is a view showing a configuration of a communication system 1 according to an embodiment of the present invention.
Fig. 2 is a view schematically showing the configuration of the communication system 1 according to the embodiment of the present invention.
Fig. 3 is a block diagram showing a configuration of a mobile station 100a according to the embodiment of the present invention.
Figs. 4A and 4B are views showing notification information according to the embodiment of the present invention.
Fig. 5 is a first flowchart showing a communication system selecting method according to the embodiment of the present invention.
Fig. 6 is a second flowchart showing the communication system selecting method according to the embodiment of the present invention.
Fig. 7 is a block diagram showing a configuration of a mobile station 100a according to a modified example of the present invention.
Fig. 8 is a first flowchart showing a communication system selecting method according to the modified example of the present invention.
Fig. 9 is a second flowchart showing the communication system selecting method according to the modified example of the present invention.
Figs. 10A and 10B is a third flowchart showing the communication system selecting method according to the modified example of the present invention.

### DETAILED DESCRIPTION OF THE PREFERRED EMBODIMENTS

### (Communication system)

Next, an embodiment of the present invention will be described with reference to the accompanying drawings. In terms of the following description of the drawings, identical or similar constituents are designated by identical or similar reference numerals. It should be noted, however, that the drawings are merely schematic.

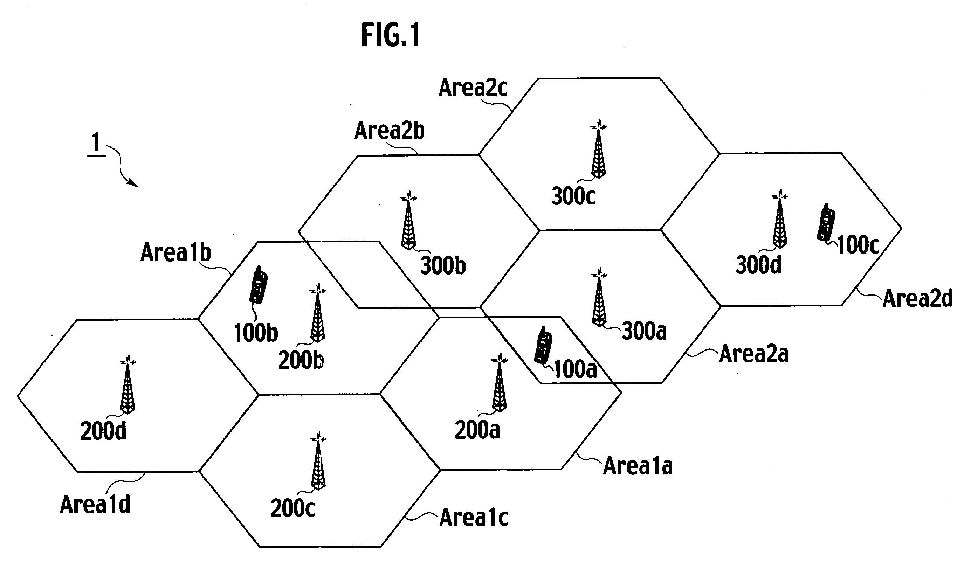

Fig. 1 is a view showing a configuration of a communication system 1 according to an embodiment of the present invention. In this embodiment, the communication system 1 includes two communication systems (a first communication system and a second communication system) having mutually different ranges of service areas capable of offering communication to a mobile station.

Here, the first communication system is a communication system (such as a 3G (3rd generation) communication system) having a wider service area than that of the second communication system while the second communication system is a communication system (such as a 4G (4th generation) communication system) having a narrower service area than that of the first communication system.

For example, the first communication system covers all over Japan as the service area, whereas the second communication system covers only a metropolitan part as the service area.

Moreover, the first communication system and the second communication system can offer real-time communication (such as voice communication) and non-real-time communication (such as data communication).

In this embodiment, the second communication system has a feature that it is more suitable for the non-real-time communication as compared to the first communication system. In other words, the second communication system can offer the non-real-time communication at a higher communication speed than the first communication system.

On the other hand, the first communication system is more suitable for the real-time communication as compared to the second communication system because the first communication system has a lower risk of disconnection of the real-time communication.

To be more precise, the first communication system includes multiple areas (Area 1a to Area 1d) and multiple base stations (base station 200a to base station 200d) for managing the respective areas. Similarly, the second communication system includes multiple areas (Area 2a to Area 2d) and multiple base stations (base station 300a to base station 300d) for managing the respective areas.

Meanwhile, the first communication system and the second communication system adopt mutually different wireless access methods (in term of synchronization methods, coding methods, modulation methods, frequency bands, and the like). Nevertheless, the first communication method and the second communication method may adopt the same wireless access method.

Moreover, each of mobile stations (mobile stations 100a to 100c) communicates with the base station which manages an area where the mobile station register a location thereof (such an area will be referred to as a registered area). In general, the mobile station can define an area in which the mobile station is currently located (such an area will be referred to as a current area) as the registered area. However, when the mobile station is located at a boundary between the current area and a neighboring area, the mobile station may define the neighboring area as the registered area.

To be more precise, the mobile station 100a is located in the area (Area 1a) corresponding to the first communication system and in the area (Area 2a) corresponding to the second communication system, and is therefore able to define Area 1a or Area 2a as the registered area. Accordingly, the mobile station 100a can communicate with the first communication system or with the second communication system.

On the contrary, the mobile station 100b is located in the area (Area 1b) corresponding to the first communication area but is not located in any area corresponding to the second communication system. Therefore, the mobile station 100b is able to define only Area 1b as the registered area. Accordingly, the mobile station 100b can only communicate with the first communication system. Meanwhile, the mobile station 100c is located in the area (Area 2d) corresponding to the second communication area but is not located in any area corresponding to the first communication system. Therefore, the mobile station 100c is able to define only Area 2d as the registered area. Accordingly, the mobile station 100c can only communicate with the second communication system.

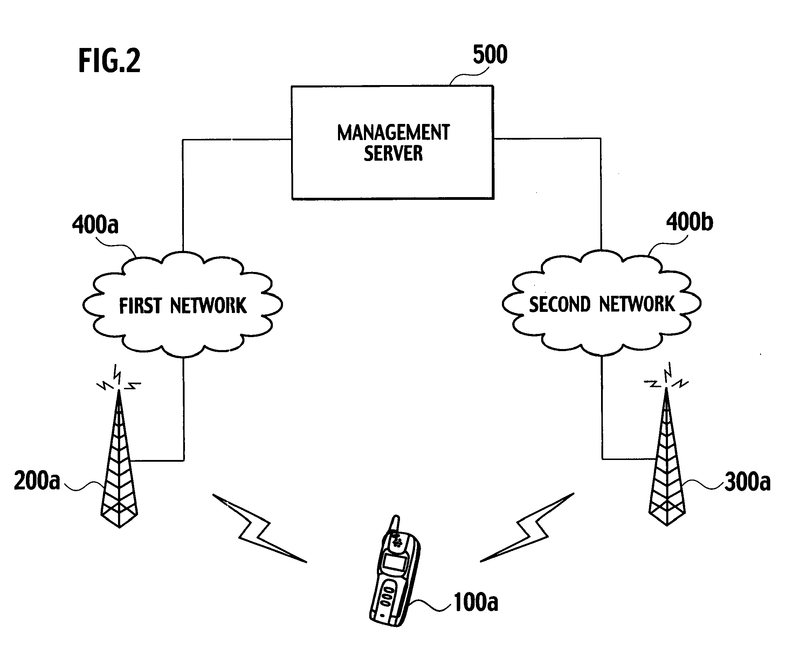

Now, the above-described communication system 1 will be described below in detail with reference to the accompanying drawing. Fig. 2 is a view schematically showing the configuration of the communication system 1 according to the embodiment of the present invention. The mobile station 100a located in Area 1a and Area 2a will be described below as an example.

As shown in Fig. 2, the communication system 1 includes the first communication system having the base station 200a and a first network 400a, the second communication system having the base station 300a and a second network 400b, and a management server 500.

Here, the first network 400a includes nodes (RNC, MSC, and SGSN in the case of 3G, for example) for managing the base station 200a, while the second network 400b includes nodes (RNC, MSC, and SGSN in the case of 3G, for example) for managing the base station 300a.

The management server 500 is connected to the first network 400a and the second network 400b, and is configured to manage the mobile station 100a through the respective networks. To be more precise, the management server 500 manages information (subscriber information) for specifying a location of the mobile station 100a, information (service subscription information) for specifying a service subscribed by a user of the mobile station 100a, information (authentication information) for authenticating whether or not the user of the mobile station 100a is an authorized user, and the like.

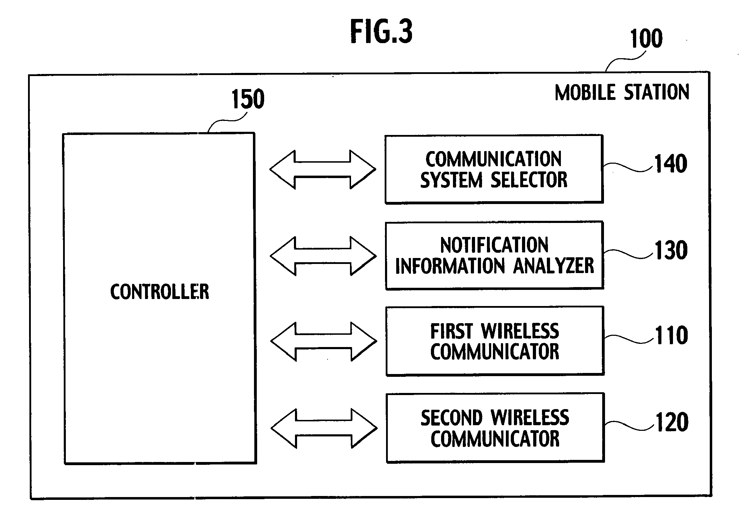

Now, a configuration of the above-described mobile station 100a will be described below with reference to the accompanying drawing. Fig. 3 is a block diagram showing the configuration of the mobile station 100a according to the embodiment of the present invention. Note that the mobile station 100b and the mobile station 100c have similar configurations to that of the mobile station 100a, and description thereof will be omitted.

As shown in Fig. 3, the mobile station 100a includes a first wireless communicator 110, a second wireless communicator 120, a notification information analyzer 130, a communication system selector 140, and a controller 150.

The first wireless communicator 110 includes functions for communicating with the first communication system (namely, the base station 200a). To be more precise, the first wireless communicator 110 has a function to transmit and receive control information (such as a common pilot signal, a synchronization signal or notification information (such as broadcast information)) and the like periodically between the mobile station 100a and the base station 200a, a function to achieve synchronization between the mobile station 100a and the base station 200a, a function to encode (or decode) signals transmitted and received between the mobile station 100a and the base station 200a, a function to modulate (or demodulate) the encoded signals, and the like.

The second wireless communicator 120 includes functions for communicating with the second communication system (namely, the base station 300a). To be more precise, the second wireless communicator 120 has a function to transmit and receive control information (such as a common pilot signal, a synchronization signal or notification information) and the like periodically between the mobile station 100a and the base station 300a, a function to achieve synchronization between the mobile station 100a and the base station 300a, a function to encode (or decode) signals transmitted and received between the mobile station 100a and the base station 300a, a function to modulate (or demodulate) the encoded signals, and the like.

That is, the mobile station 100a is connectable to the first communication system and to the second communication system even when the first communication system and the second communication system adopt mutually difference access methods.

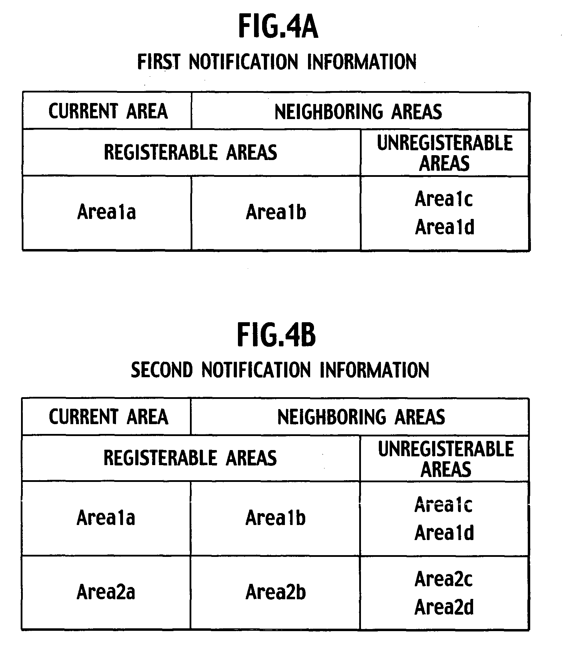

The notification information analyzer 130 analyzes notification information (hereinafter referred as first notification information (such as first broadcast information)) received from the base station 200a and notification information (hereinafter referred as second notification information (such as second broadcast information)) received from the base station 300a. Here, the notification information includes information specifying the area (the current area) where the mobile station 100a is located, information specifying an area (a neighboring area) neighbor to the current area, and the like. Details of the notification information will be described later (see Figs. 4A and 4B).

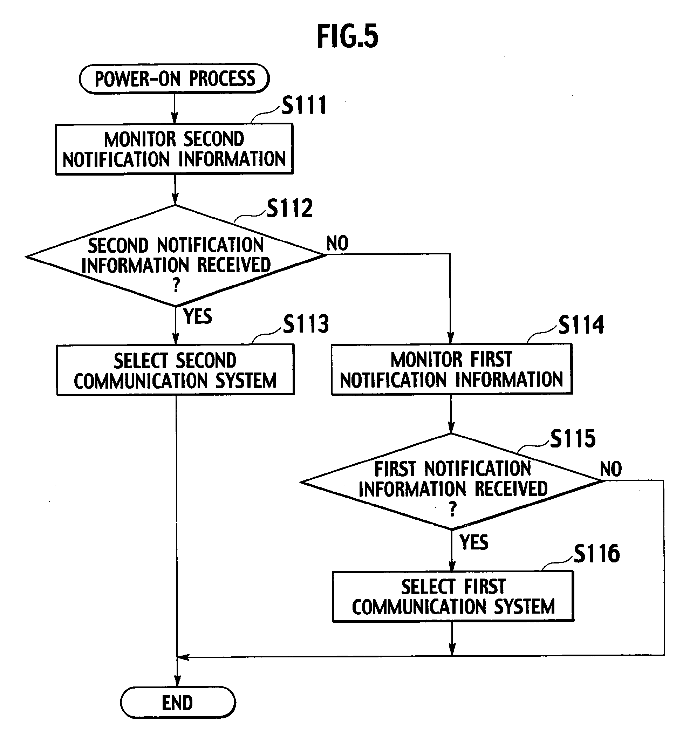

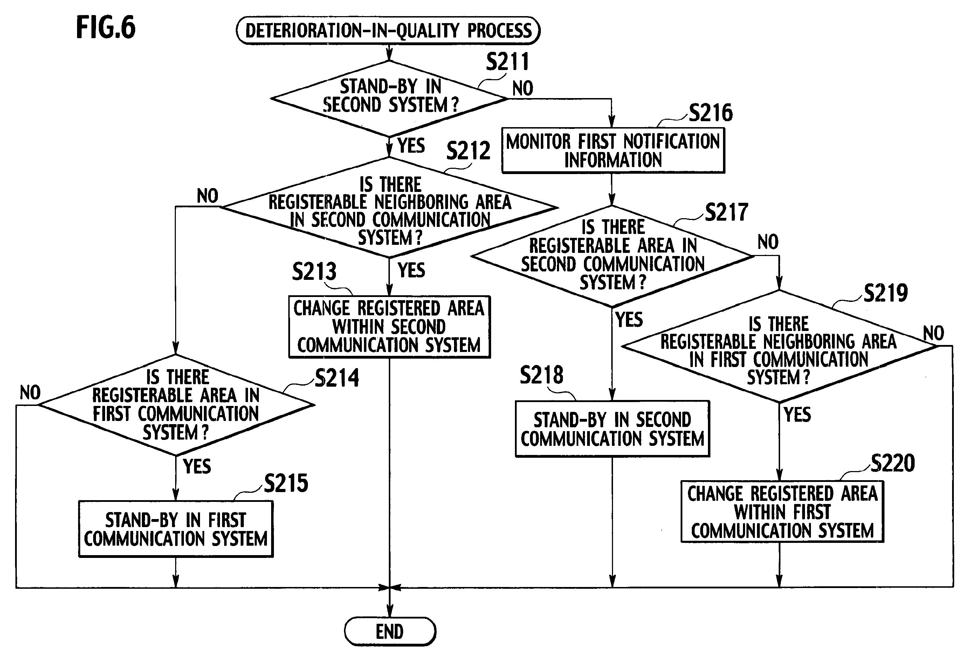

The communication system selector 140 selects a communication system for performing communication with the mobile station 100a out of the first communication system and the second communication system based on an analysis result on the notification information by the notification information analyzer 130. Details of operations of the communication system selector 140 will be described later (see Fig. 5 and Fig. 6).

Here, the communication system for performing communication is a communication system in which the mobile station 100a stands by, or in other words, the communication system to be used by the mobile station 100a for actually performing communication.

The controller 150 controls the respective blocks (namely, the first wireless communicator 110, the second wireless communicator 120, the notification information analyzer 130, and the communication system selector 140).

Now, the above-described notification information will be described below with reference to the accompanying drawings. Figs. 4A and 4B are views showing the notification information according to the embodiment of the present invention.

As shown in Fig. 4A, the first notification information to be received from the base station 200a includes the information (Area 1a) specifying the current area corresponding to the first communication system and the information (Area 1b to Area 1d) specifying the neighboring areas corresponding to the first communication system. Moreover, the first notification information includes information (Area 1a and Area 1b) specifying registerable areas corresponding to the first communication system and information (Area 1c and Area 1d) specifying unregisterable areas corresponding to the first communication system. These pieces of information will be hereinafter collectively referred to as first area information.

Moreover, the first area information includes a spreading code (a scrambling code or a channelization code) used in the registerable area, timing information for achieving synchronization in the registerable area, an information size to be successfully transmitted and received in the registered area, and the like.

Here, the registerable area means an area that allows the mobile station 100a to register the location (to allow the mobile station 100a to communicate). For example, when the mobile station 100a is located on a boundary between the current area and the neighboring area, the neighboring area is categorized as the registerable area.

On the other hand, the unregisterable area means an area that does not allow the mobile station 100a to register the location. For example, an area that the communication system side prohibits registration of the location by the mobile station 100a or an area reserved for the use by an operator of the communication system is categorized as the unregisterable area.

Meanwhile, as shown in Fig. 4B, the second notification information to be received from the base station 300a includes the information (Area 2a) specifying the current area corresponding to the second communication system and the information (Area 2b to Area 2d) specifying the neighboring areas corresponding to the second communication system. Moreover, the second notification information includes information (Area 2a and Area 2b) specifying the registerable areas corresponding to the second communication system and information (Area 2c and Area 2d) specifying the unregisterable areas corresponding to the second communication system. These pieces of information will be hereinafter collectively referred to as second area information.

The second notification information includes the first area information in addition to the second area information.

Moreover, the second area information includes the spreading code (the scrambling code or the channelization code) used in the registerable area, the timing information for achieving synchronization in the registerable area, the information size to be successfully transmitted and received in the registered area, and the like.

Therefore, in the case of handover from an area in the first communication system to an area in the second communication system, the mobile station 100a can reduce a time period necessary for the handover by use of the first area information and the second area information included in the second notification information.

Here, it is not always necessary that the information specifying the neighboring area corresponding to the first communication system (or the second communication system) include the information for specifying the neighboring area (that is, the information indicating presence of the neighboring area). In other words, the information specifying the neighboring area may be the information indicating absence of the neighboring area.

Meanwhile, an area which serves as the neighboring area and as the registerable area will be hereinafter referred to as a registerable neighboring area.

### (Communication system selecting method)

Now, a communication system selecting method according to the embodiment of the present invention will be described below with reference to the accompanying drawings. Fig. 5 and Fig. 6 are flowcharts showing the communication system selecting method according to the embodiment of the present invention.

First, the communication system selecting method when the mobile station 100a is turned on will be described with reference to Fig. 5.

In Step S111, the mobile station 100a monitors a control signal (such as the synchronization signal or the second notification information) to be transmitted from the base station of the second communication system, and monitors whether or not it is possible to receive the above-described second notification information.

Here, the mobile station 100a monitors whether or not it is possible to receive the second notification information for given monitoring duration after the mobile station 100a is turned on. This given monitoring duration may be a preset time period or a time period arbitrarily set up by the user.

In Step S112, when the mobile station 100a succeeds in receiving the second notification information, the mobile station 100a judges whether or not the second notification information includes the information on the registerable neighboring area. When the second notification information includes the information on the registerable neighboring area, the mobile station 100a moves to process in Step S113. On the contrary, when the second notification information does not include the information on the registerable neighboring area (or when it is not possible to receive the second notification information), the mobile station 100a moves to process in Step S114.

In Step S113, the mobile station 100a selects the second communication system as the system in which the mobile station 100a stands by.

In Step S114, the mobile station 100a monitors a control signal (such as the synchronization signal or the first notification information) to be transmitted from the base station of the first communication system, and monitors whether or not it is possible to receive the above-described first notification information.

Here, the mobile station 100a monitors whether or not it is possible to receive the first notification information for given monitoring duration after the moment of judgment that the second notification information does not include the information on the registerable neighboring area.

In Step S115, the mobile station 100a judges whether or not it is possible to receive the first notification information in Step S114. When the mobile station 100a succeeds in receiving the first notification information, the mobile station 100a moves to process in Step S116. On the contrary, when the mobile station 100a fails to receive the first notification information, this power-on process is terminated.

In Step S116, the mobile station 100a selects the first communication system as the system in which the mobile station 100a stands by.

In this embodiment, the above-described power-on process performed when the mobile station 100a is turned on. However, the present invention will not be limited only to the foregoing. It is also possible to perform the power-on process periodically or when the mobile station 100a transits from the current area to the neighboring area.

Next, the communication system selecting method in the case of deterioration in quality of the communication system in which the mobile station 100 stands by will be described with reference to Fig. 6.

Here, the case of deterioration in quality of the communication system includes a case of reduction in intensity of the signals received from the base station in the registered area, a case of an increase in interference due to signals transmitted from the base station in the neighboring area, and the like.

For example, the mobile station 100a detects deterioration in quality of the communication system based on a ratio between signal intensity of the common pilot signal received from the base station in the registered area and the interference (such a ratio will be referred to as a signal to interference ratio, or a SIR).

As shown in Fig. 6, in Step S211, the mobile station 100a judges whether or not the mobile station 100a stands by in the second communication system. When the mobile station 100a stands by in the second communication system, the mobile station 100a moves to process in Step S212. On the contrary, when the mobile station 100a does not stand-by in the second communication system, the mobile station 100a moves to process in Step S216. Here, the mobile station 100a receives the first notification information when the mobile station 100a stands by in the first communication system. Meanwhile, the mobile station 100a receives the second notification information when the mobile station 100a stands by in the second communication system.

In Step S212, based on the above-described second notification information, the mobile station 100a judges whether or not there is the registerable neighboring area corresponding to the second communication system. When there is the registerable neighboring area, the mobile station 100a moves to process in Step S213. On the contrary, when there is no registerable neighboring area, the mobile station 100a moves to process in Step S214.

In Step S213, the mobile station 100a changes the registered area within the second communication system. Specifically, the mobile station 100a changes the registered area with the registerable neighboring area.

In Step S214, based on the second notification information, the mobile station 100a judges whether or not there is the registerable area corresponding to the first communication system. Here, as described previously, the second notification information also includes the first area information in addition to the second area information. Accordingly, the mobile station 100a can judge whether or not there is the registerable area corresponding to the first communication system. When there is the registerable area, the mobile station 100a moves to process in Step S215. When there is no registerable area, the mobile station 100a terminates this deterioration-in-quality process.

In Step S215, the mobile station 100a selects the first communication system as the system in which the mobile station 100a stands by.

In Step S216, the mobile station 100a monitors the control signal (such as the synchronization signal or the second notification information) to be transmitted from the base station of the second communication system, and monitors whether or not it is possible to receive the above-described second notification information.

In Step S217, when the mobile station 100a succeeds in receiving the second notification information, the mobile station 100a judges whether or not there is the registerable area corresponding to the second communication system based on the second notification information. When there is the registerable area, the mobile station 100a moves to process in Step S218. On the contrary, when there is no registerable area (or when it is not possible to receive the second notification information), the mobile station 100a moves to process in Step S219.

In Step S218, the mobile station 100a selects the second communication system as the system in which the mobile station 100a stands by.

In Step S219, the mobile station 100a judges whether or not there is the registerable neighboring area corresponding to the first communication system based on the first notification information (or the second notification information when the second notification information is successfully received in Step S216). When there is the registerable neighboring area, the mobile station 100a moves to process in Step S220. On the contrary, when there is no registerable neighboring area, the mobile station 100a terminates the deterioration-in-quality process.

In Step S220, the mobile station 100a changes the registered area within the first communication system. Specifically, the mobile station 100a changes the registered area with the registerable neighboring area.

In Fig. 6, the mobile station 100a selects the communication system, in which the mobile station 100a stands by, when there is deterioration in communication quality in a stand-by state. However, the present invention will not be limited only to the foregoing. For example, the mobile station 100a may select the communication system for performing communication when the communication quality is deteriorated in the course of communication with the communication system.

### (Function and effect)

According to the communication system 1 of the embodiment of the present invention, the mobile station 100a can offer non-real-time communication in high communication quality by preferentially selecting the second communication system that is more suitable for non-real-time communication as compared to the first communication system.

Moreover, the mobile station 100a preferentially selects the second communication system when there is the registerable neighboring area corresponding to the second communication system. In this way, the mobile station can select the second communication system that is more suitable for non-real-time communication while suppressing a possibility of disconnection of communication (or real-time communication, in particular) attributable to absence of the registerable neighboring area.

In addition, each of the first area information and the second area information included in the second notification information includes the spreading code used in the registerable area, the timing information for achieving synchronization in the registerable area, the information size to be successfully transmitted and received in the registered area, and the like. Accordingly, in the case of handover from an area in the first communication system to an area in the second communication system, the mobile station 100a can reduce the time period necessary for the handover by use of the first area information and the second area information included in the second notification information.

### (Modified example 1)

### (Configuration of communication system 1)

Now, a modified example of the above-described embodiment will be described with reference to the accompanying drawings. The following explanation will mainly highlight differences from the above-described embodiment.

To be more precise, in the modified example 1, the mobile station 100a selects the communication system based on the type of communication to be started by the mobile station 100a. Here, the communication to be started by the mobile station 100a includes communication in which the mobile station 100a serves as a receiver and communication in which the mobile station 100a serves as a transmitter. Moreover, the communication to be started by the mobile station 100a includes the real-time communication and the non-real-time communication.

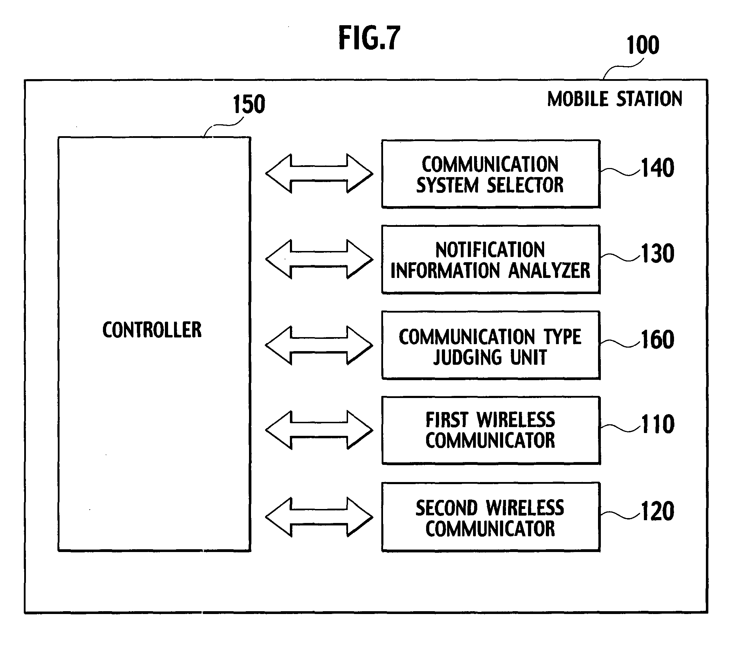

Fig. 7 is a block diagram showing a configuration of the mobile station 100a according to the modified example of the present invention. As shown in Fig. 7, the mobile station 100a includes a communication type judging unit 160 in addition to the above-described configuration shown in Fig. 3.

The communication type judging unit 160 judges the type of communication to be started on the basis of a control signal to be transmitted and received in the communication to be started by the mobile station 100a. For example, when an identifier indicating the real-time communication is included in the control signal, the communication type judging unit 160 judges that the communication to be started by the mobile station 100a is the real-time communication (such as voice communication). On the contrary, when an identifier indicating the non-real-time communication is included in the control signal, the communication type judging unit 160 judges that the communication to be started by the mobile station 100a is the non-real-time communication (such as data communication).

The communication system selector 140 selects the communication system to be connected to the mobile station 100a based on a judgment result by the communication type judging unit 160.

### (Communication system selecting method)

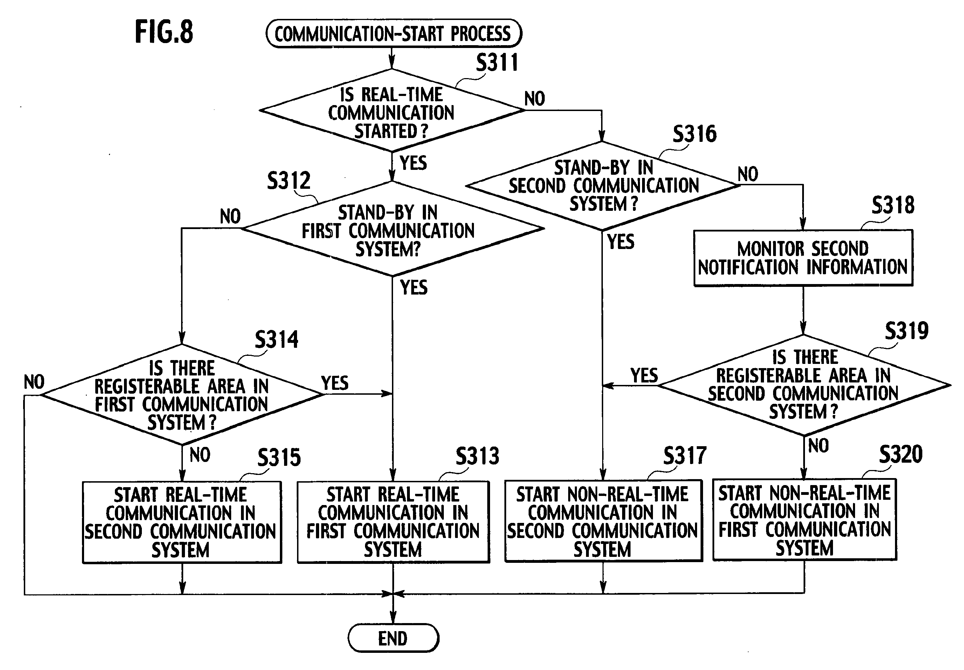

Now, a communication system selecting method according to the modified example of the present invention will be described below with reference to the accompanying drawings. Fig. 8 to Fig. 10 are flowcharts showing the communication system selecting method according to the modified example of the present invention.

First, the communication system selecting method when the mobile station 100a starts the communication will be described with reference to Fig. 8. In Fig. 8, the mobile station 100a is connectable to the first communication system and to the second communication system. Specifically, the mobile station 100a is located in the area corresponding to the first communication system and in the area corresponding to the second communication system. In a stand-by state in the first communication system, the mobile station 100a receives the first notification information. Meanwhile, in a stand-by state in the second communication system, the mobile station 100 receives the second notification information.

As shown in Fig. 8, in Step S311, the mobile station 100a judges whether or not the communication started by the mobile station 100a is the real-time communication. Moreover, when the communication to be started by the mobile station 100a is the real-time communication, the mobile station 100a moves to process in Step S312. On the contrary, when the communication to be started by the mobile station 100a is the non-real-time communication, the mobile station 100a moves to process in Step S316.

In Step S312, the mobile station 100a judges whether or not the mobile station 100a is in a stand·by state in the first communication system. When the mobile station 100a is in the stand-by state in the first communication system, the mobile station 100a moves to process in Step S313. On the contrary, when the mobile station 100a is not in the stand·by state in the first communication system, the mobile station 100a moves to process in Step S314.

In Step S313, the mobile station 100a starts the real-time communication in the first communication system.

In Step S314, the mobile station 100a judges whether or not there is the registerable area corresponding to the first communication system based on the second notification information. When there is the registerable area, the mobile station 100a moves to the process in Step S313. On the contrary, when there is no registerable area, the mobile station 100a moves to process in Step S315. Here, as described previously, the second notification information includes the first area information in addition to the second area information. Accordingly, the mobile station 100a can judge whether or not there is the registerable area corresponding to the first communication system.

In Step S315, the mobile station 100a starts the real-time communication in the second communication system.

In Step S316, the mobile station 100a judges whether or not the mobile station 100a is in a stand-by state in the second communication system. When the mobile station 100a is in the stand-by state in the second communication system, the mobile station 100a moves to process in Step S317. On the contrary, when the mobile station 100a is not in the stand-by state in the second communication system, the mobile station 100a moves to process in Step S318.

In Step S317, the mobile station 100a starts the non-real-time communication in the second communication system.

In Step S318, the mobile station 100a monitors the control signal (such as the synchronization signal or the second notification information) to be transmitted from the base station of the second communication system, and monitors whether or not it is possible to receive the above-described second notification information.

In Step SS19, when the mobile station 100a succeeds in receiving the second notification information, the mobile station 100a judges whether or not there is the registerable area corresponding to the second communication system based on the second notification information. When there is the registerable area, the mobile station 100a moves to the process in Step S317. On the contrary, when there is no registerable area (or when it is not possible to receive the second notification information), the mobile station 100a moves to process in Step S320.

In Step S320, the mobile station 100a starts the non-real-time communication in the first communication system.

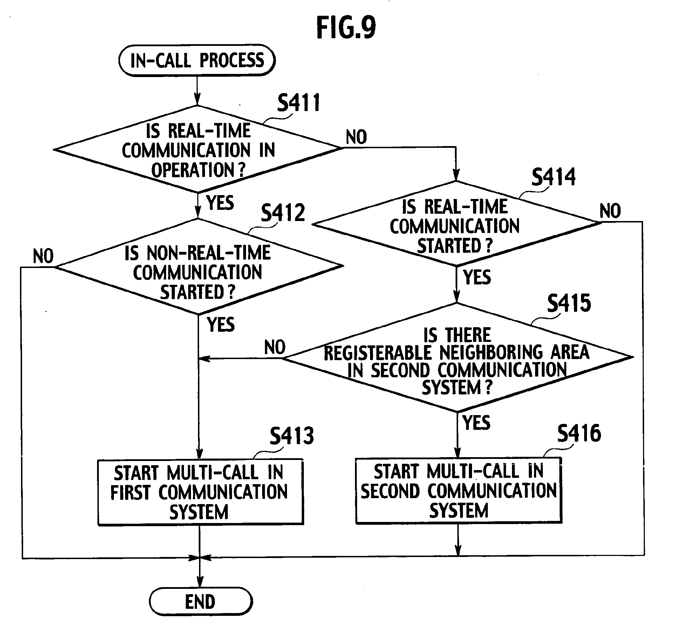

Next, the communication system selecting method when the mobile station 100a is already in the course of performing the communication will be described with reference to Fig. 9. In Fig. 9, the mobile station 100a is connectable to the first communication system and to the second communication system, and either the real-time communication or the non-real-time communication is already in operation.

As shown in Fig. 9, in Step S411, the mobile station 100a judges whether or not the communication already in operation is the real-time communication. Moreover, when the communication already in operation is the real-time communication, the mobile station 100a moves to process in Step S412. On the contrary, when the communication already in operation is the non-real-time communication, the mobile station 100a moves to process in Step S414.

In Step S412, the mobile station 100a judges whether or not the mobile station 100a is about to start the non-real-time communication in addition to the real-time communication. When the mobile station 100a is about to start the non-real-time communication, the mobile station 100a moves to process in Step S413. On the contrary, when the mobile station 100a is not about to start the non-real-time communication, the mobile station 100a terminates this in-call process.

In Step S413, the mobile station 100a starts a multi-call (a combination of the real-time communication and the non-real-time communication) in the first communication system.

In Step S414, the mobile station 100a judges whether or not the mobile station 100a is about to start the real-time communication in addition to the non-real-time communication. When the mobile station 100a is about to start the real-time communication, the mobile station 100a moves to process in Step S415. On the contrary, when the mobile station 100a is not about to start the real-time communication, the mobile station 100a terminates this in-call process.

In Step S415, the mobile station 100a judges whether or not there is the registerable neighboring area corresponding to the second communication system based on the second notification information. When there is the registerable neighboring area, the mobile station 100a moves to process in Step S416. On the contrary, when there is no registerable neighboring area, the mobile station 100a moves to the process in Step S413.

In Step S416, the mobile station 100a starts the multi-call (the combination of the real-time communication and the non-real-time communication) in the second communication system.

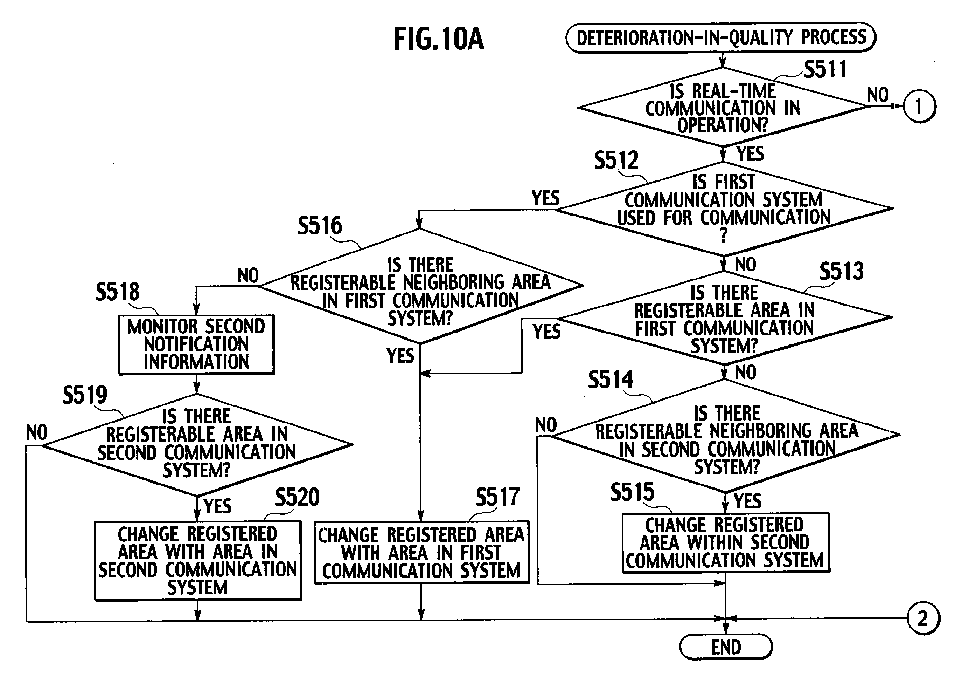

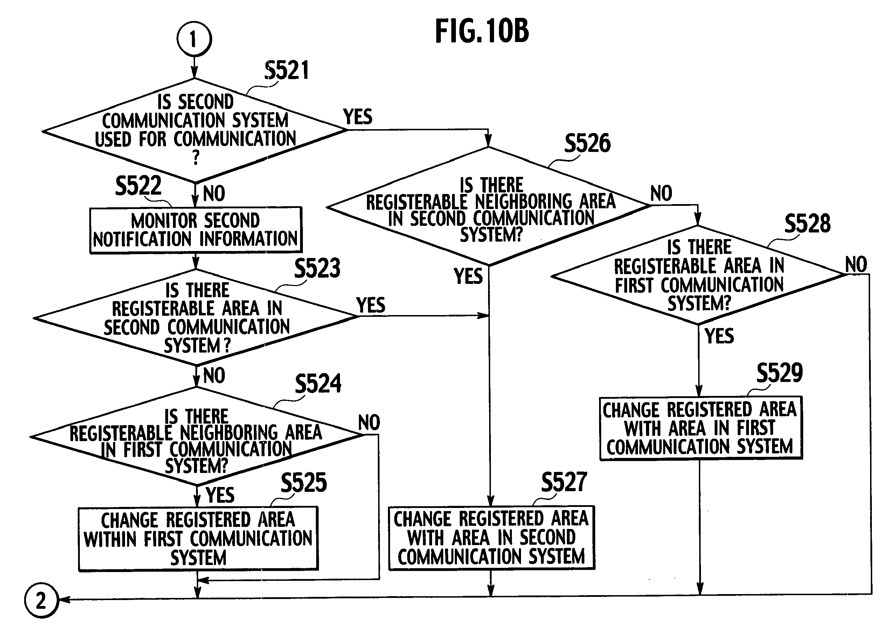

Next, the communication system selecting method in the case of deterioration in communication quality of the communication (the real-time communication or the non-real-time communication) performed by the mobile station 100a will be described with reference to Figs. 10A and 10B.

As shown in Figs. 10A and 10B, in Step S511, the mobile station 100a judges whether or not the communication performed by the mobile station 100a is the real-time communication. Moreover, when the communication performed by the mobile station 100a is the real-time communication, the mobile station 100a moves to process in Step S512. On the contrary, when the communication performed by the mobile station 100a is the non-real-time communication, the mobile station 100a moves to process in Step S521.

In Step S512, the mobile station 100a judges whether or not the mobile station 100a performs the real-time communication in the first communication system. When the mobile station 100a performs the real-time communication in the first communication system, the mobile station 100a moves to process in Step S516. On the contrary, when the mobile station 100a does not perform the real-time communication in the first communication system, the mobile station 100a moves to process in Step S513.

In Step S613, the mobile station 100a judges whether or not there is the registerable area corresponding to the first communication system based on the second notification information. When there is the registerable area, the mobile station 100a moves to the process in Step S517. On the contrary, when there is no registerable area, the mobile station 100a moves to process in Step S514.

In Step S514, the mobile station 100a judges whether or not there is the registerable neighboring area corresponding to the second communication system based on the second notification information. When there is the registerable neighboring area, the mobile station 100a moves to process in Step S515. On the contrary, when there is no registerable neighboring area, the mobile station 100a terminates this deterioration-in-quality process.

In Step S515, the mobile station 100a changes the registered area within the second communication system. Specifically, the mobile station 100a changes the registered area with the registerable neighboring area.

In Step S516, the mobile station 100a judges whether or not there is the registerable neighboring area corresponding to the first communication system based on the first notification information. When there is the registerable neighboring area, the mobile station 100a moves to the process in Step S517. On the contrary, when there is no registerable neighboring area, the mobile station 100a moves to process in Step S518.

In Step S517, the mobile station 100a changes the registered area with the area in the first communication system. To be more precise, when the mobile station 100a performs the real-time communication in the first communication system, the mobile station 100a changes the registered area with the registerable neighboring area corresponding to the first communication system. Meanwhile, when the mobide station 100a performs the real-time communication in the second communication system, the mobile station 100a changes the registered area from the current area corresponding to the second communication system to the registerable area corresponding to the first communication system.

In Step S518, the mobile station 100a monitors the control signal (such as the synchronization signal or the second notification information) to be transmitted from the base station of the second communication system, and monitors whether or not it is possible to receive the above-described second notification information.

In Step S519, when the mobile station 100a succeeds in receiving the second notification information, the mobile station 100a judges whether or not there is the registerable neighboring area corresponding to the second communication system based on the second notification information. When there is the registerable neighboring area, the mobile station 100a moves to process in Step S520. On the contrary, when there is no registerable neighboring area (or when it is not possible to receive the second notification information), the mobile station 100a terminates this deterioration-in-quality process.

In Step S520, the mobile station 100a changes the registered area with the area in the second communication system. To be more precise, the mobile station 100a changes the registered area from the current area corresponding to the first communication system to the registerable area corresponding to the second communication system.

In Step S521, the mobile station 100a judges whether or not the mobile station 100a performs the non-real-time communication in the second communication system. When the mobile station 100a performs the non-real-time communication in the second communication system, the mobile station 100a moves to process in Step S526. On the contrary, when the mobile station 100a does not perform the non-real-time communication in the second communication system, the mobile station 100a moves to process in Step S522.

In Step S522, the mobile station 100a monitors the control signal (such as the synchronization signal or the second notification information) to be transmitted from the base station of the second communication system, and monitors whether or not it is possible to receive the above-described second notification information.

In Step S523, when the mobile station 100a succeeds in receiving the second notification information, the mobile station 100a judges whether or not there is the registerable area corresponding to the second communication system based on the second notification information. When there is the registerable area, the mobile station 100a moves to process in Step S527. On the contrary, when there is no registerable area (or when it is not possible to receive the second notification information), the mobile station 100a moves to process in Step S524.

In Step S524, the mobile station 100a judges whether or not there is the registerable neighboring area corresponding to the first communication system based on the first notification information (or the second notification information). When there is the registerable neighboring area, the mobile station 100a moves to process in Step S525. On the contrary, when there is no registerable neighboring area, the mobile station 100a terminates this deterioration-in-quality process.

In Step S526, the mobile station 100a changes the registered area within the first communication system. Specifically, the mobile station 100a changes the registered area with the registerable neighboring area.

In Step S526, based on the second notification information, the mobile station 100a judges whether or not there is the registerable neighboring area corresponding to the second communication system. When there is the registerable neighboring area, the mobile station 100a moves to the process in Step S527. When there is no registerable neighboring area, the mobile station 100a moves to process in Step S528,

In Step S527, the mobile station 100a changes the registered area with the area in the second communication system. To be more precise, when the mobile station 100a performs the non-real-time communication in the second communication system, the mobile station 100a changes the registered area with the registerable neighboring area corresponding to the second communication system. Meanwhile, when the mobile station 100a performs the non-real-time communication in the first communication system, the mobile station 100a changes the registered area from the current area correaponding to the first communication system to the registerable area corresponding to the second communication system.

In Step S528, the mobile station judges whether or not there is the registerable neighboring area corresponding to the first communication system based on the second notification information. When there is the registerable neighboring area, the mobile station 100a moves to process in Step S529. On the contrary, when there is no registerable neighboring area, the mobile station 100a terminates this deterioration-in-quality process.

In Step S529, the mobile station 100a changes the registered area with the area in the first communication system. To be more precise, the mobile station 100a changes the registered area from the current area corresponding to the second communication system to the registerable area corresponding to the first communication system.

In Figs. 10A and 10B, if the communication quality of the real-time communication performed in the first communication system is deteriorated and there is no registerable neighboring area corresponding to the first communication system, the registered area is changed from the current area corresponding to the first communication system to the registerable area corresponding to the second communication system provided that there is the registerable area corresponding to the second communication system (the processes from Step S518 to Step S520). However, the present invention will not be limited only to this configuration. It is also possible to omit the processes from Step S518 to Step S520.

Similarly, if the communication quality of the non-real-time communication performed in the second communication system is deteriorated and there is no registerable neighboring area corresponding to the second communication system, the registered area is changed from the current area corresponding to the second communication system to the registerable area corresponding to the first communication system provided that there is the registerable area corresponding to the first communication system (the processes from Step S528 to Step S529). However, the present invention will not be limited only to this configuration. It is also possible to omit the processes from Step S528 to Step S529.

### (Function and effect)

According to the communication system 1 of the modified example 1, when the mobile station 100a performs the real-time communication, it is possible to suppress a possibility of disconnection of the real-time communication by preferentially selecting the first communication system having the wider service area than that of the second communication system.

Meanwhile, when the mobile station 100a performs the non-real-time communication, it is possible to offer the non-real-time communication in high communication quality to a user by preferentially selecting the second communication system having a higher communication speed than that of the first communication system.

Moreover, when performing the real-time communication, the mobile station 100a preferentially selects the second communication system when there is the registerable neighboring area corresponding to the second communication system. In this way, the mobile station 100a can select the second communication system that is more suitable for the non-real-time communication while suppressing a possibility of disconnection of communication attributable to absence of the registerable neighboring area.

In particular, in an attempt to start the real-time communication in the course of performing the non-real-time communication (in the case of performing the multi-call), the mobile station 100a can select the communication system suitable for performing the multi-call based on the presence of the registerable neighboring area corresponding to the second communication system.

Meanwhile, if the communication quality of the real-time communication performed by the mobile station 100a is deteriorated, the first communication system having the wider service area than that of the second communication system is preferentially selected as a handover destination. In this way, it is possible to suppress a possibility of disconnection of the real-time communication.

In addition, if the communication quality of the non-real-time communication performed by the mobile station 100a is deteriorated, the second communication system having the higher communication speed than that of the first communication system is preferentially selected as the handover destination. In this way, it is possible to provide the user with the non-real-time communication in high communication quality.

### (Other embodiments)

Although the present invention has been described with reference to the above embodiment, it is to be understood that the description and the drawings constituting part of this disclosure will not limit the scope of the invention. It is obvious to those skilled in the art that various other embodiments, examples, and operation techniques are possible by the teachings in this disclosure.

For example, in the above-described embodiment, the first notification information to be received from the first communication system only includes the information (the first area information) capable of specifying the current area and the neighboring areas corresponding to the first communication system. However, the present invention will not be limited only to this configuration. Specifically, the first notification information may also include the information (the second area information) capable of specifying the current area and the neighboring areas corresponding to the second communication system.

Meanwhile, the second notification information includes the first area information and the second area information. However, the present invention will not be limited only to this configuration. Specifically, the second notification information may only include the second area information.

Moreover, in the power-on process of the above-described embodiment, the mobile station 100a selects the second communication system as the communication system in which the mobile station 100a stands by when the second notification information includes the registerable neighboring area. However, the present invention will not be limited only to this configuration. For example, the mobile station 100a may select the second communication system as the communication system in which the mobile station 100a stands by even if the second notification information does not include the registerable neighboring area, provided that the mobile station 100a succeeds in receiving the second notification information. Alternatively, the mobile station 100a may select the second communication system as the communication system in which the mobile station stands by when the second notification information includes at least a predetermined number of the registerable neighboring areas.

In addition, in the above-described embodiment, the second communication system covers the narrower service area as compared to the first communication system. However, the present invention will not be limited only to this configuration. Specifically, the second communication system may be configured to cover the service area which is as large as that of the first communication system.

## Claims

1. A mobile station being connectable to a first communication system configured to manage a service area with a respective first area and to a second communication system configured to manage a service area with a respective second area, the mobile station comprising:
a receiver configured to receive notification information including at least any one of first area information capable of specifying the first area and a first neighboring area neighbor to the first area, and second area information capable of speeding the second area and a second neighboring area neighbor to the second area, from at least any one of the first communication system and the second communication system; and
a communication system selector configured to select the communication system for performing the communication, out of the first communication system and the second communication system, based on the notification information received by the receiver.

2. The mobile station according to claim 1,
wherein the first communication system and the second communication system are able to provide real-time communication and non-real-time communication,
the second communication system is more suitable for the non-real-time communication as compared to the first communication system,
the mobile station further comprising a communication type judging unit configured to judge whether the real-time communication is to be started or the non-real-time communication is to be started, and
the communication system selector selects the communication system for performing the communication, based on a judgment result by the communication type judging unit.

3. The mobile station according to claim 2,
wherein the communication system selector selects the first communication system in preference to the second communication system, when the communication type judging unit judges that the real-time communication is to be started.

4. The mobile station according to claim 2,
wherein the communication system selector selects the second communication system in preference to the first communication system, when the communication type judging unit judges that the non-real-time communication is to be started.

5. The mobile station according to claim 2,
wherein the communication system selector selects the first communication system in preference to the second communication system, when the communication type judging unit judges that the non-real-time communication is to be started in the course of performing the real-time communication.

6. The mobile station according to claim 2,
wherein the communication system selector selects the first communication system in preference to the second communication system, when the communication type judging unit judges that the real-time communication is to be started in the course of performing the non-real-time communication.

7. The mobile station according to claim 2,
wherein the communication system selector selects the second communication system in preference to the first communication system when the communication type judging unit judges that the real-time communication is to be started in the course of performing the non-real-time communication and when the notification information includes the information to specify the second neighboring area.

8. A communication system selecting method of allowing a mobile station to select a communication system, the mobile station being connectable to a first communication system configured to manage a service area with a respective first area and to a second communication system configured to manage a service area with a respective second area, the communication system selecting method comprising the steps of:
receiving notification information including at least any one of first area information capable of specifying the first area and a first neighboring area neighbor to the first area, and second area information capable of specifying the second area and a second neighboring area neighbor to the second area, from the first communication system or the second communication system; and
selecting any of the first communication system and the second communication system, based on the notification information received from the first communication system or the second communication system.
